(19) Europäisches Patentamt
European Patent Office
Office européen des brevets

(11) **EP 4 722 996 A1**

(12) **EUROPEAN PATENT APPLICATION**

(43) Date of publication:
08.04.2026 Bulletin 2026/15

(21) Application number: 25206134.6

(22) Date of filing: 01.10.2025

(51) International Patent Classification (IPC):
*G06N 20/00* (2019.01)

(52) Cooperative Patent Classification (CPC):
G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.10.2024 US 202463702103 P

(71) Applicant: GDM Holding LLC
Mountain View, CA 94043 (US)

(72) Inventors:
• ARNOLD, Sébastien Marc Renato
Mountain View, 94043 (US)
• HUA, Nan
Mountain View, 94043 (US)
• ZHOU, Jin Peng
Mountain View, 94043 (US)
• SHA, Fei
Mountain View, 94043 (US)

(74) Representative: Marks & Clerk GST
1 New York Street
Manchester M1 4HD (GB)

(54) **USE OF PRIVILEGED INFORMATION TO IMPROVE AUTOMATIC EVALUATIONS**

(57) According to one aspect, there is provided a computer-implemented method comprising: obtaining a first solution generated by a candidate model using a first query; generating a performance metric, using an evaluation model and conditioned on the first query, first solution and privileged information, wherein the performance metric comprises an evaluation output representing a performance of the candidate model; wherein the privileged information was not available to the candidate model when generating the first solution.

**FIG. 1**

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

SUMMARY

This specification generally describes systems and methods that provide improved automated evaluations of the performance of trained machine learning models, such as a Language Model (LM). Automated evaluation of candidate models, for example performed by an evaluation model rather than a human, is desirable in order to accelerate the evaluation process and reduce the cost associated with evaluation. However, it is difficult for an evaluation model to provide accurate and trustworthy evaluation of a candidate model, especially when the evaluation model is smaller than the candidate model it is evaluating and/or when the candidate model is being evaluated on particularly difficult or complex tasks. The techniques described herein include providing privileged information, where privileged information is information which is not available to the candidate model, to the evaluation model during evaluation, such that the evaluation model can more easily and accurately evaluate the candidate model.

In a first example, a computer-implemented method comprises obtaining a first solution generated by a candidate model using a first query and generating, using an evaluation model and conditioned on the first query, first solution and privileged information, a performance metric. The performance metric comprises an evaluation output representing a performance of the candidate model. The privileged information comprises information that was not available to the candidate model when generating the first solution.

The methods and systems described herein are particularly advantageous when used with multimodal data. For example, in these examples, the first query can comprise multimodal data such as: an image and an image processing task, an audio signal and an audio processing task or sensor data and a signal processing task. The respective tasks may comprise a sequence of tokens, for example a text sequence, at least partially defining the task. The first solution may comprise an answer to the respective task, for example an answer to the image processing task, audio processing task or signal processing task.

The candidate model may be a first candidate model and the evaluation output may be a first evaluation output. The method may further comprise obtaining a second solution generated by a second candidate model using the first query. Generating the performance metric may further comprise using the evaluation model conditioned on the first query, the second solution and the privileged information, such that the performance metric further comprises a second evaluation output representing a performance of the second candidate model. The privileged information may further comprise a relative performance of the first and second candidate models. The privileged information was not available to the second candidate model when generating the second solution.

In a second example, a computer-implemented method comprises obtaining a first solution generated by a first candidate model using a first query, obtaining a second solution generated by a second candidate model using the first query, and generating a performance metric, using an evaluation model and conditioned on the first query, first solution, second solution and privileged information, wherein the performance metric comprises a relative performance of the first and second candidate models. The privileged information was not available to the first candidate model when generating the first solution and was not available to the second candidate model when generating the second solution.

The methods described herein may further comprise obtaining one or more hints, each hint comprising an intermediate solution between the first query and a ground-truth solution. The methods may further comprise obtaining a first hint-assisted solution generated by providing the first query and a first hint of the one or more hints to the first candidate model. The methods may comprise generating, using the first candidate model, the first hint-assisted solution. The methods may further comprise obtaining a second hint-assisted solution generated by providing the first query and the first hint of the one or more hints to the second candidate model. The methods may comprise generating, using the second candidate model, the second hint-assisted solution.

Generating the performance metric may further comprise using the evaluation model conditioned on the first query, first hint-assisted solution and privileged information and/or on the first query, second hint-assisted solution and privileged information. The performance metric may further comprise a first hint-assisted evaluation output representing a performance of the first candidate model when given a first hint and/or a second hint-assisted evaluation output representing a performance of the second candidate model when given a first hint and/or a first hint-assisted relative performance representing a relative performance of the first and second candidate models when given a first hint.

The methods may comprise obtaining one or more further hint-assisted solutions generated by providing the first query, the first hint and one or more further hints of the one or more hints to the first and second candidate models. Generating the performance metric may further comprise iteratively generating one or more further hint-assisted performance metrics representing the performance of the first and/or second candidate models when given iteratively more hints. Generating the performance metric may be performed using the evaluation model conditioned on the first query, privileged information, first hint, one or more further hints and respective further hint-assisted solutions.

Components of the performance metric may be generated in parallel. That is, a plurality of the first evaluation output, second evaluation output, first hint-assisted evaluation output, second hint-assisted evaluation output, first hint-assisted relative performance and one or more further hint-assisted performance metrics are generated in parallel.

The methods may comprise performing an action based on the performance metric. The action may comprise providing a further query to the first and/or second candidate model. The action may comprise providing an indication that further training of the first and/or second candidate model is required. The action may comprise determining a training regime for further training of the first and/or second candidate model. The training regime may be based at least partially on the performance metric.

The evaluation model may be smaller than the first and/or second candidate models.

The privileged information may be automatically synthesized. The methods may comprise generating one or more pieces of privileged information. Generating privileged information may comprise providing an input comprising the first query to a synthesis model and generating, using the synthesis model, one or more pieces of privileged information. The input may further comprise one or more instructions associated with a request to generate the privileged information. The input may further comprise a ground-truth solution to the first query.

Also described herein is computer storage media storing instructions that, when executed by one or more computers, cause the one or more computers to perform any of the methods described herein, and a system comprising one or more computers and one or more storage devices storing instructions which, when executed, cause the one or more computers to perform any of the methods described herein.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF FIGURES

Figure 1 shows an example of a system used for evaluating one or more candidate models using privileged information;
Figure 2 shows a flow diagram of a computer-implemented method for evaluating a candidate model;
Figure 3 shows a graph illustrating the comparative performance of two different evaluation models with and without privileged information;
Figure 4 shows a graph illustrating the effect of privileged information on multimodal tasks of varying difficulty;
Figure 5 shows a graph illustrating the effect of privileged information on the performance of various evaluation models;
Figure 6 shows an example of a system used for evaluating a candidate model using hints;
Figure 7 shows a flow diagram of a computer-implemented method for evaluating a candidate model using progressively more hints;
Figure 8 shows graphs illustrating the effect of progressively providing hints on the accuracy of two candidate models.

DETAILED DESCRIPTION

The disclosed systems and methods provide improved automated evaluations of machine learning model performance by introducing "privileged information" to an evaluation model. This privileged information is any data not available to the candidate machine learning model during its generation of a solution. By providing this extra context, the evaluation model, which may be smaller or less capable than the candidate model, can perform more accurate and nuanced evaluations, especially on complex tasks.

By providing privileged information to the evaluation model, the range of problems which the evaluation model can evaluate is improved. For example, weaker evaluation models, e.g. having a smaller number of parameters, can evaluate stronger candidate models, e.g. having a larger number of parameters. Furthermore, by providing privileged information to the evaluation model, two (or more) candidate models can be evaluated in a manner which improves separability between the performances. The separability between candidate model performance is particularly aided by providing privileged information to the evaluation model in situations where the candidate models have a low accuracy (e.g. generate incorrect answers). In such instances, by providing privileged information to the evaluation model, partial credit can be assigned to incomplete solutions, even when no candidate model arrives at the correct solution.

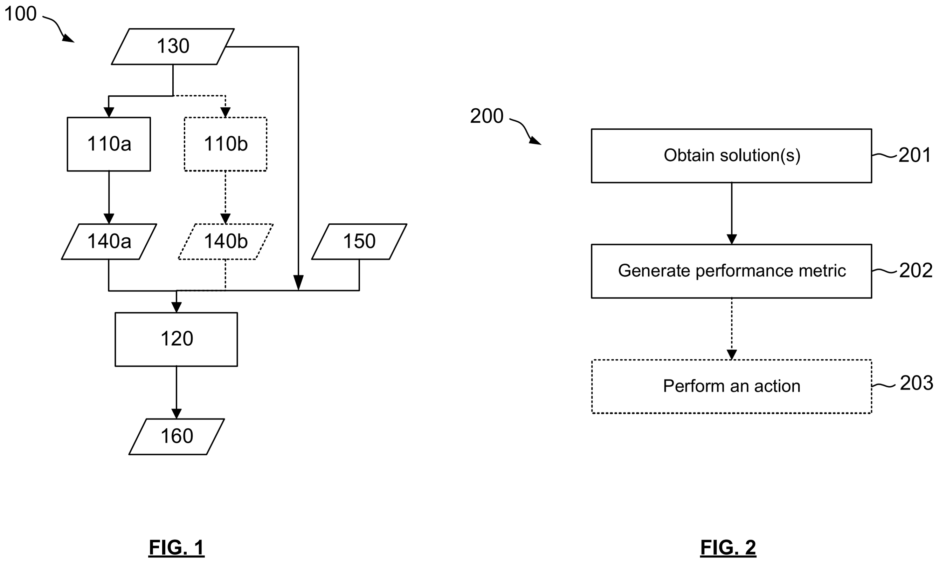

Figure 1 shows an example of a system 100 used for evaluating one or more candidate models using privileged information 150. The illustrated system 100 comprises a first candidate model 110a, a second candidate model 110b and an evaluation model 120.

In operation, a query 130 is provided to each of the candidate models 110a and 110b. In response to the query 130, each candidate model 110a, 110b generates a corresponding solution 140a, 140b. For example, the first candidate model 110a generates a first solution 140a and the second candidate model 110b generates a second solution 140b.

Separately, privileged information 150 is obtained. It is important to note that the privileged information 150 is not available to the candidate models 110a and 110b when they generate their respective solutions 140a, 140b. The query 130, the solutions 140a, 140b, and the privileged information 150 are then provided to the evaluation model 120. The evaluation model 120 processes these inputs and, based on them, generates a performance metric 160.

The performance metric 160 may be any metric representing a performance of one or more of the models being evaluated. The performance metric 160 may comprise, for example, a first evaluation output representing a performance of the first candidate model 110a and/or a second evaluation output representing a performance of the second candidate model 110b. Additionally or alternatively, the performance metric 160 may comprise a relative performance of the first and second candidate models 110a, 110b.

The system 100 may be employed with a different number of candidate models than illustrated, for example only the first candidate model 110a or more than two candidate models, depending on which model(s) the evaluation model 120 is being used to evaluate. In an example implementation where the evaluation model 120 is arranged to evaluate the first candidate model 110a only, the evaluation model 120 would receive the query, the first solution 140a and the privileged information 150 and generate a performance metric 160 representing the performance of the first candidate model 110a. In this implementation, the system 100 would simply omit the second candidate model 110b and its solution 140b. In yet other implementations, the system 100 may comprise more than two candidate models and the evaluation model 120 may be configured to evaluate each candidate model, for example by receiving a solution from each candidate model it is to evaluate, outputting a performance metric 160 representing the performance of each candidate model alone or a relative performance of any combination of the candidate models.

**The candidate model(s) and evaluation model**

The models (e.g. the candidate models 110a, 110b and evaluation model) may comprise language models (LMs). A candidate model is trained to receive an input sequence (e.g. the query 130) and generate, as an output, an output sequence (e.g. a solution 140a, 140b) conditioned on the input sequence 130. For example, the input sequence may be a query such as a mathematical equation (e.g. "$\int_x ln(x)\, dx = ?$") or an image processing query (e.g. *"what does this image say?"*). Each candidate model 110a, 110b is configured to (e.g. trained to) generate an answer to the query 130 as an output (e.g. the first solution 140a from the first candidate model 110a and the second solution 140b from the second candidate model 140b). The output from a candidate model may be referred to as a candidate solution. The candidate solution may represent a solution to the first query. For example, the candidate solution may comprise a mathematical answer (e.g. "$x\, ln(x) - x + c$") or a sequence of words which answer an image processing query (e.g. *"the image says 'no smoking'"*). In a well-performing candidate model, the candidate solution is correct. However, some generated candidate solutions may be incorrect, for example depending on the performance of the candidate model. The first query may be referred to as a candidate query or a (first/candidate) prompt.

The training of and use of candidate models is described in more detail further below. In particular, it is discussed how a candidate model can be used with multimodal data and used to perform any of a large number of particular tasks, for example image processing, audio processing or signal processing.

The evaluation model is trained to receive a query, a solution and evaluate the candidate model based on the solution generated by the candidate model. The evaluation model is further provided with privileged information to more easily enable the evaluation model to evaluate the candidate model.

The evaluation model may be smaller than the candidate model. For example, the evaluation model may have (significantly) fewer parameters than the candidate model. The evaluation model may have been trained on less data than candidate model. In this way, the evaluation model may be less computationally burdensome than the candidate model, but still provide useful evaluations of the candidate models. By being provided with the privileged information, the (smaller) evaluation model can arrive at an accurate evaluation of the solution, despite being smaller, and therefore more accurately evaluate the candidate model's performance.

**Privileged information**

The privileged information 150 may comprise one or more ground-truth solutions. The ground-truth solution may be, a solution to the first query 130 (or to a query which is similar to the first query) which is factually correct. A ground-truth solution may be used in response to queries which have a strong correctness component, for example wherein there are one or more correct solutions and one or more incorrect solutions, rather than queries which are open-ended and/or which may have subjective solutions. Queries with a strong correctness component may include, for example, queries focused on factual solutions (e.g. query *"Who is Barack Obama's wife?"* and solution *"Barack Obama's wife is Michelle Obama"),* instruction seeking queries (e.g. query *"how to cook an omelette"* and solution *"beat eggs, cook, add fillings, fold"),* or translation (e.g. query *"translate 'to be or not to be, that is the question' into Spanish"* and solution "ser o *no ser, esa* es *la cuestión").* More than one ground-truth solution may be provided. For example, some queries may have more than one correct answer or multiple answers with a similar degree of correctness. Ground-truth solutions may also be referred to as gold-reference responses or golden reference answers.

The privileged information 150 may comprise one or more rating guidelines. A rating guideline may comprise an instruction which helps the evaluation model 120 in evaluating solutions. A rating guideline may include an aspect of a correct answer (e.g. *"if asked how to make an omelette, ensure the response mentions adding a splash of cold water before cooking the eggs")* or a preferred element of an answer (e.g. *"prefer responses with specific details about X").* The one or more rating guidelines may be associated with the first query 130. That is, each rating guideline contains information which is directly relevant (e.g. contextually relevant to) the first query 130. In examples where the query 130 includes a reference to (e.g. a text recitation of or an image containing a picture of) a real-world object, an associated rating guideline may include information relating to said real-world object. A rating guideline may also be generic. For example, such a rating guideline could help the evaluation model 120 evaluate a solution to any query rather than a rating guideline relating to a specific query. A rating guideline may be associated with a category of queries. For example, some rating guidelines may be relevant to any mathematical problem-based queries. Other rating guidelines may be relevant to any instruction-seeking queries. The one or more rating guidelines may comprise any combination of query-specific guidelines, category-specific guidelines and/or generic guidelines.

The privileged information 150 may comprise one or more prior evaluations. A prior evaluation may be an evaluation which has previously been given to a solution, for example the first solution 140a, or a solution which is similar to the first solution, for example as evaluated at a different time and/or by a different method. The prior evaluation may represent an evaluation output (also referred to as a rating) given to the solution (or a solution which is similar to the solution) in response to the first query 130 (or to a query which is similar to the first query 130). The prior evaluation may have been assigned by a human, i.e. is a human-generated evaluation. The prior evaluation may be an evaluation which was given to a prior solution generated by an alternative model given the first query 130 (or a query which is similar to the first query 130). Alternatively, the prior evaluation may be an evaluation which was given to a prior solution generated by a model (e.g. the first model 110a) given the first query 130 (or a query which is similar to the first query 130).

The privileged information 150 may comprise one or more search results. A search result may include data extracted from a search (e.g. a web-based search or a search of a database) using the first query 130. The data may be, for example, parsed from the results of the search. The search may be performed in real-time when generating the solution and/or when evaluating the solution. Alternatively, the search result may be obtained from a cached version of a previous search. The cache of search results may be updated periodically. Periodically updating the cache of search results may be particularly beneficial, for example, when a factually correct solution changes over time (e.g. in response to a query "what happened in the last SNL episode?" or another whose answer updates periodically).

The privileged information 150 may comprise one or more multimodal annotations. A multimodal annotation may comprise further information associated with one or more of the modalities of data included in a multimodal query (e.g. if the first query comprises multimodal data). A multimodal annotation may comprise, for example, an image caption associated with an image. The image caption may identify an object depicted in the image and/or one or more characteristics of the object in the image (e.g. the object's position, colour, size etc.). A multimodal annotation comprising an image caption may be particularly useful when used in combination with a query that comprises an image captioning task or other image processing task. A multimodal annotation may comprise an audio transcript associated with audio data. The audio transcript may comprise a text sequence representing the words and/or noises occurring in the audio data. A multimodal annotation comprising an audio transcript may be particularly useful when used in combination with a query that comprises an audio-based dialog question-answering task or other audio processing task. A multimodal annotation may comprise one or more target sub-clips of a video. A multimodal annotation comprising one or more target sub-clips of a video may be particularly useful when used in combination with a query that comprises a long-video understanding task. A multimodal annotation may comprise, for example, a sensor caption associated with sensor data. The sensor caption may identify an object or phenomenon distinguishable in the sensor data, one or more characteristics (e.g. size, position, type) of the object or phenomenon, or any other conditions of the physical system being sensed. A multimodal annotation which includes such characteristics may be particularly useful when used in combination with a query that comprises a signal processing task.

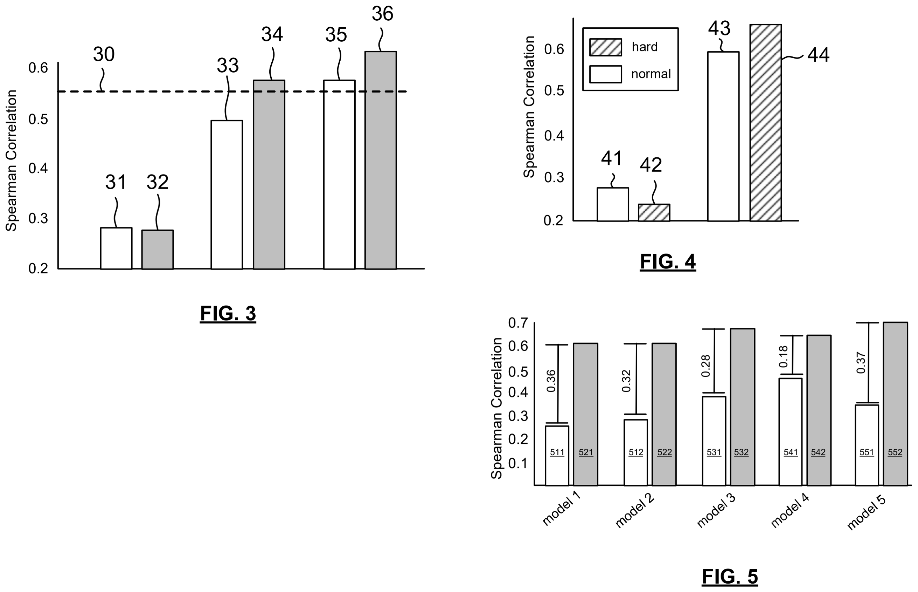

The privileged information 150 may comprise one or more intermediate solutions. An intermediate solution may represent a correct step of working between the first query and a correct solution. For example, an intermediate solution may comprise a step which must be considered in order to subsequently arrive at a correct solution. For example, in a mathematical problem, the intermediate solution(s) may represent one or more steps of working between the initial mathematical problem and a correct solution to the mathematical problem. For example, solutions to the mathematical query *"find all angles x, 0° ≤ x ≤ 180°, such that sin 6x + cos 4x = 0. Enter all the solutions, separated by commas"* may be aided by providing one or more of the following intermediate solutions, each of which represent a correct step of working: *"we can write sin 6x + cos 4x = sin 6x + sin (90° - 4x)"*; *"then, from the sum-to-product formula sin 6x + sin (90° - 4x) = 2sin cos = 2sin (x + 45°) cos (5x - 45°)"*; *"thus, sin (x + 45°) = 0 or cos (5x - 45°) = 0. If sin (x + 45°) = 0, then x = 135°. If cos (5x - 45°), then 5x - 45° must be 90°, 270°, 450°, 630° or 810°"*. When multiple intermediate solutions are available for a single query (e.g. the first query), they may be referred to as a set of intermediate solutions comprising a first intermediate solution, second intermediate solution etc. The intermediate solutions may also be referred to as hints. Hints are discussed in more detail further below and with reference to Figure 3.

## Performance metrics

The performance metrics may be a metric quantifying the performance of any of the candidate models alone, or a relative performance of multiple candidate models. The relative performance may be an indication that the first model 110a performed better than the second model 110b, the second model 110b performed better than the first model 110a, that both models performed equivalently, or any other metric which indicates the performance of one model compared to the other.

The performance can be represented, for example, using Spearman correlation. However, any other metric for evaluating the performance of a model may be used.

Figure 2 shows a flow diagram of a computer-implemented method 200 for evaluating a candidate model. The method 200 can be implemented with the system 100 of Figure 1.

In a first example, a method used to evaluate a single candidate model will be described. The candidate model may, for example, be the first candidate model 110a described with reference to Figure 1. The method 200 includes obtaining 201 a first solution 140a. The first solution 140a is generated by the first candidate model 110a using a first query 130 as an input. The method 200 also includes generating a performance metric 160. Generating the performance metric 160 is performed using an evaluation model 120 and conditioned on the first query 130, first solution 140a and privileged information 150. As described above, the privileged information 150 is provided to the evaluation model 120 to assist in evaluating the candidate model 110a, but is not available to the candidate model 110a in the generation of the first solution 140a. In this example, where a single candidate model is being evaluated, the performance metric 160 comprises a first evaluation output representing a performance of the candidate model 110a.

The method 200 may further comprise providing the first query 130 to the candidate model and generating, using the candidate model 110a, the first solution 140a. In other implementations, the first solution 140a may have already been generated previously and may be obtained differently, for example fetched from computer storage.

In another example, the method 200 may be used to evaluate two candidate models. The candidate models may be, for example, the first and second candidate models 110a, 110b described with reference to Figure 1. In this example, the method further comprises obtaining a second solution 140b generated by a second candidate model 110b using the first query 130. The method 200 may further comprise providing the first query 130 to the second candidate model 110b and generating, using the second candidate model 110b, the second solution 140b. That is, obtaining the second solution 140b may comprise generating, using the second candidate model 110b, the second solution 140b conditioned on the first query 130. In other implementations, the second solution 140b may have already been generated previously and may be obtained differently, for example fetched from computer storage.

Generating the performance metric 160 also includes providing the second solution 140b to the evaluation model 120 and generating the performance metric 160 further conditioned on the second solution 140b. The output performance metric 160 can include a second evaluation output which represents a performance of the second candidate model 110b. That is, generating the performance metric 160 also comprises generating, using the evaluation model and conditioned on the first query 130, second solution 140b and privileged information 150, a second evaluation output representing a performance of the second candidate model 140. As described above, the privileged information 150 is provided to the evaluation model 120 to assist in evaluating the second candidate model 110b, but the privileged information was not available to the second candidate model 110b when generating the second solution 140b.

Based on the first evaluation output and the second evaluation output, a relative performance of the first and second candidate models 110a, 110b can be determined. Or in an alternative implementation, the relative performance of the first and second candidate models 110a, 110b may be determined without generating the first and/or second evaluation. That is, the evaluation model 120 may generate, conditioned on the first query 130, first solution 140a, second solution 140b and privileged information 150, the relative performance of the first and second candidate models 110a, 110b.

Following the generation 202 of the performance metric, the method 200 may optionally include performing 203 one or more actions. A number of actions are described in more detail below.

An action may comprise providing a further query to the candidate model. A decision regarding whether to provide a further query may be made based on the performance metric 160. The method 200 may, for example, further include providing a further query to the candidate model if the evaluation output associated with that candidate model surpasses a first threshold. Alternatively, the performance of multiple candidate models may be evaluated by the evaluation model 120 and one of the multiple candidate models selected for the provision of further queries, based on which candidate model is identified as having the better performance according to the performance metric 160.

An action may comprise recommending or initiating further training. A decision regarding whether to recommend or initiate further training may be made based on the performance metric 160. The method 200 may, for example, further include providing an indication that further training of the candidate model is required if the evaluation output associated with that candidate model surpasses a second threshold.

The first and second thresholds may comprise threshold accuracies, for example relating to a desired accuracy, a target accuracy etc. Candidate models used for certain tasks, e.g. generating medical diagnoses, may require a higher accuracy than candidate models used for other tasks, e.g. recreational generative use. The term 'surpasses' may include being greater than or less than (or greater than or equal to or less than or equal to) the relevant threshold. In an example, a further query may be provided to the candidate model if the evaluation output indicates a performance better than (e.g. higher than) a desired performance (e.g. accuracy). In another example, an indication that further training of the candidate model is required if the evaluation output indicates a performance worse than (e.g. lower than) a desired performance (e.g. accuracy).

If further training is indicated, the method 200 may further comprise determining a training regime for further training of (at least one of) the candidate models based on the performance metric 160. A training regime may comprise, for example, a degree of training (e.g. a large amount of training if the performance metric indicates that the solution had an extremely low accuracy or a small amount of training if the performance metric 160 indicates that the solution was close to a correct answer). A training regime may comprise, for example, an area or field to be focused upon for further training. For example, it may be determined from one or more evaluation outputs that the model underperforms in image captioning tasks. In such instances, the training regime may comprise further training in the field of image captioning. A training regime may comprise providing an easier or harder training example to the candidate model, to provide a 'hill-climbing' approach to push the boundaries of the model's performance on frontier problems.

An action may comprise taking no action. For example, if the performance metric 160 suggests that the accuracy is high enough for use and that no further training is required, the resulting action may be to take no action and perform no further training.

An action may comprise controlling an agent, for example a mechanical agent in a real world environment or a software agent in a simulated environment. The action may comprise generating an instruction to control the agent. The agent may be controlled to perform one or more tasks. Such tasks may be achieved by implementing one or more actions. It may be determined that, if the performance metric 160 indicates a high degree of confidence and accuracy, the model may be used to perform a specific task in the real world. In implementations where the input comprises multimodal input, the multimodal input may comprise, for example, a visual input such as an image or video, audio data representing values of an audio waveform, e.g. instantaneous amplitude data or time-frequency domain data; or data representing observations (not necessarily visual) of an environment with which an agent controlled by the multimodal machine learning model interacts. The solution output by the candidate model(s) may relate to a task to be performed by the agent, for example data relating to the operation of an agent acting in an environment to perform a variety of tasks. Multimodal data and associated tasks are described in more detail further below.

Figure 3 shows a graph illustrating the comparative performance of two different evaluation models with and without privileged information. Both evaluation models are LMs. In particular, the LMs are in the Gemini family of models. More information regarding the Gemini models is described in "Gemini 1.5: Unlocking multimodal understanding across millions of tokens of context", arXiv:2403.05530. A first evaluation model is a relatively small, lightweight model. A second evaluation model is larger than the first evaluation model, having been more extensively trained. Each evaluation model is used to evaluate solutions to multimodal problems using the "Vibe-Eval" benchmark. "Vibe-Eval" is described in more detail in "Vibe-Eval: a hard evaluation suite for measuring progress of multimodal language models", Padlewski et al. https://publications.reka.ai/reka-vibe-eval.pdf. Each evaluation model evaluates first using its evaluating capabilities alone, and then with a single piece of privileged information comprising a gold reference example (e.g. a ground truth solution), and finally with multiple pieces of privileged information comprising a gold reference example and rating guidelines. The performance is measured using Spearman Correlation. The performance of human graders is represented by a dotted line 30, indicating an average vote of three human graders.

A first bar 31 and second bar 32 show the performance of the first and second evaluation models, respectively, when using no privileged information. Both the first and second evaluation models perform relatively poorly, with a Spearman Correlation of approximately 0.28.

A third bar 33 and fourth bar 34 show the performance of the first and second evaluation models, respectively, when provided with privileged information comprising a gold reference example. Here, both models show a dramatic increase in performance. The first model improves significantly to a correlation of 0.49, while the second model reaches 0.57. This demonstrates the power of providing even a single piece of privileged information to the evaluation process, allowing the evaluation models to act as more informed automated judges.

A fifth bar 35 and sixth bar 36 show the performance of the first and second evaluation models, respectively, when provided with privileged information comprising a gold reference example and additional rating guidelines. In this example, the performance of both models improves even further, with the first evaluation model reaching 0.57 and the second evaluation model reaching 0.63. The performance of both models now surpasses the human baseline, demonstrating that leveraging privileged information can lead to automated evaluation process that is more reliable than human evaluators. It also demonstrates that different types of privileged information can have a compounding effect on increasing grading accuracy. Furthermore, it can be seen that the performance of the 'lightweight' model rapidly approaches the performance of the larger evaluation model, and outperforms human evaluators, when provided with privileged information, indicating that a relatively small evaluation model can provide reliable evaluations.

Figure 4 shows a graph illustrating the effect of privileged information on multimodal tasks of varying difficulty. The graph shows the Spearman Correlation between an automatic grader's ratings and human ratings for two subsets of a multimodal task: "normal" difficulty and "Hard" difficulty. The bars represent the performance of the second evaluation model of the example described with reference to Figure 3, when provided with no privileged information and when provided with privileged information.

A first bar 41 and second bar 42 show the performance of the evaluation model when the evaluation model is given no privileged information. On the "normal" difficulty task, the model achieves a correlation of around 0.27. However, on the "hard" difficulty task, its performance drops significantly, with a correlation of approximately 0.23. This demonstrates that a model's ability to evaluate a task drops as the complexity of the task increases.

A third bar 43 and fourth bar 44 show the performance of the evaluation model when the evaluation model is given privileged information to aid its evaluation. In this scenario, the correlation for the "normal" task increases substantially, rising to around 0.55. More importantly, the correlation for the "hard" task increases further, reaching a value of approximately 0.61. This demonstrates that privileged information is especially useful for frontier benchmarks. By providing information that the evaluation model lacks, the evaluation model can provide a more reliable evaluation, even on the most challenging tasks. As such, the use of privileged information can lead to viable automated evaluations on tasks previously thought to be beyond the reach of automated evaluation systems.

Figure 5 shows a graph illustrating the effect of privileged information on the performance of five different evaluation models when evaluating the performance of a candidate model performing a benchmark mathematical problem. The performance is measured by Spearman Correlation against human evaluators. There are five evaluation models, each of which are LMs, each with a slightly different architectures, number of parameters, extent of training etc. The first and second models are particularly lightweight, for example being smaller (e.g. having fewer parameters). The third, fourth and fifth evaluation models are of a more similar size but feature slightly different architectures. In particular, the third evaluation model is in the Gemini family as discussed above, the fourth model is a GPT-4-type model and the fifth model is a Claude-type model. GPT-4 is described in more detail in the "GPT-4 Technical Report" at https://openai.com/research/gpt-4, and Claude is described in more detail at https://www.anthropic.com/news/claude-3-5-sonnet and the associated "Claude 3.5 Sonnet Model Card Addendum".

The performance of each evaluation model is represented by a first bar 511, 521, 531, 541, 551 indicating the performance when no privileged information is provided and a second bar 512, 522, 532, 542, 552 indicating the performance when privileged information is provided during the evaluation process.

For every evaluation model (model 1-5), there is a substantial increase in Spearman Correlation when privileged information is provided. For example, the performance of model 1 increases by 0.36 points from 0.25 to 0.61, and the performance of model 2 increases by 0.32 points from 0.29 to 0.61. This indicates that the smaller models benefit extensively from privileged information and can outperform other, more complex models such as models 3, 4 and 5, when the smaller models are provided with privileged information when compared to the performance of the more complex models with no privileged information. As such, it is possible to use smaller (e.g. less computationally intensive, having lower storage requirements) models for the automated evaluation of complex tasks, by leveraging privileged information.

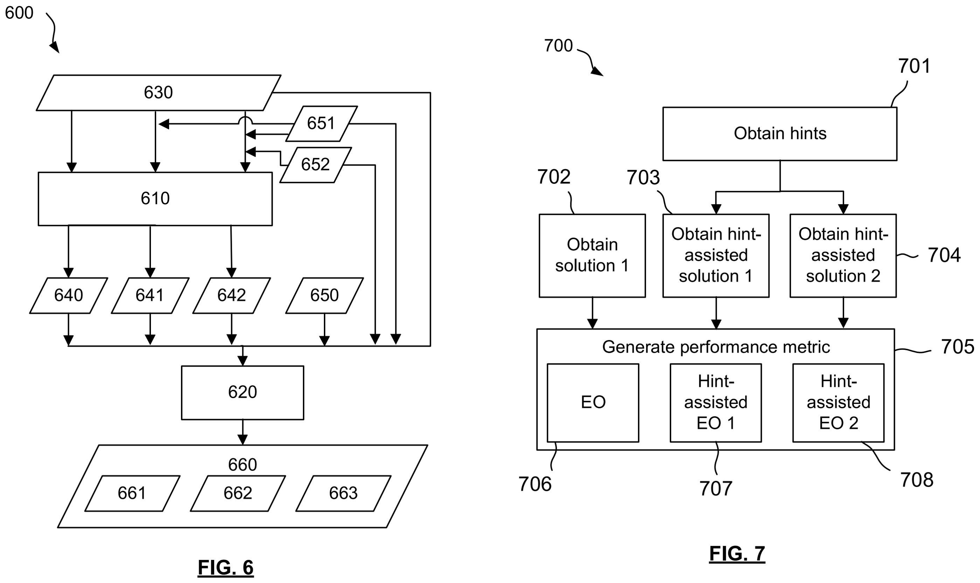

Figure 6 shows an example of a system 600 used for evaluating a candidate model 610 using hints. The system 600 is described below as evaluating a single candidate model 610, but the system 600 and associated methods can also be used to evaluate multiple candidate models using hints. The candidate model 610 may be, for example, one of the first or second candidate models 110a, 110b described with reference to Figure 1. The system 600 also has an evaluation model 620. The evaluation model 620 may be, for example, the evaluation model 120 described with reference to Figure 1.

In operation, a query 630 is provided to the candidate model 610. In response to the query 630, the candidate model 610 generates a corresponding first solution 640 conditioned on the query 630.

Separately, one or more hints are obtained. Hints are described in more detail above and may represent, for example, intermediate solutions between the query 630 and a ground truth solution. Hints can be referred to as intermediate solutions.

A first and second hint 651, 652 of the one or more hints are also provided to the candidate model 610. The candidate model 610 can then generate a first hint-assisted solution 641 conditioned on the query 630 and first hint 651. The candidate model 610 can generate a second hint-assisted solution 642 conditioned on the query 630, first hint 651 and second hint 652.

Separately, the system obtains privileged information which is not provided to the candidate model 610 when generating the first solution 640.

The evaluation model 620 can receive any of: the first solution 640, the first hint-assisted solution 641, the second hint-assisted solution 642 and the privileged information and generate a performance metric 660 based on one or more of the received solutions and information. The evaluation step is described in more detail below with reference to Figure 7. The performance metric 660 can comprise a first evaluation output 661 representing the performance of the candidate model 610 given no hints, a first hint-assisted evaluation output 662 representing the performance of the candidate model 610 given a first hint 651 and/or a second hint-assisted evaluation output 663 representing the performance of the candidate model 610 given the first hint 651 and a second hint 652.

The provision of hints to the candidate model 610 simplifies the problem being solved by the candidate model 610 and enables the construction of different difficulty tiers by including more or fewer hints when the candidate model 610 generates solutions. The outputs 661, 662, 663 represent a tiered assessment of the candidate model's performance given iteratively more hints. By comparing these outputs, one can see how a candidate model's performance changes as more assistance is provided. This is particularly valuable for difficult problems where the candidate model might fail without any hints but succeed with one or two.

The process of obtaining the solutions 640, 641, 642 can be obtained in parallel. Similarly, once an appropriate number of solutions have been obtained, the evaluation outputs 661, 662, 663 may be generated in parallel.

Figure 7 shows a flow diagram of a computer-implemented method 700 for evaluating a candidate model using progressively more hints. The method 700 comprises obtaining 701 hints. The hints may be generated, for example by a synthesis model as described in more detail below. Alternatively, the hints may be obtained in another way, for example fetched from computer memory.

The method 700 further comprises obtaining 702 a first solution 641. The first solution 640 is generated by the first candidate model 610 using a first query 630 as an input. The first solution 640 is generated without the candidate model 610 having access to any privileged information 650 or any hints 651, 652.

The method 700 further comprises obtaining 703 a first hint-assisted solution 641 by providing the first query 630 and a first hint 651 to the candidate model 610. This process may be performed multiple times, for example obtaining 704 a second hint-assisted solution 642 by providing the first query 630, the first hint 651 and a second hint 652 to the candidate model 610. The process may be performed additional times, e.g. with three, four, five etc. hints. Each solution (e.g. first solution 640, first hint-assisted solution 641, second hint-assisted solution 642) is generated independently from the other solutions, and so one or more of the solutions may be generated in parallel. Alternatively, each solution obtaining step 702, 703, 704 may be performed separately and in any order.

The method 700 further comprises generating 705, using an evaluation model and conditioned on the first query 630, one or more of the obtained solutions 640, 641, 642 and privileged information, a performance metric 660. In particular, the generation of the performance metric comprises generating 706 a first evaluation output 661 representing the performance of the candidate model 610 having access to no hints, generating 707 a first hint-assisted evaluation output 662 representing a performance of the candidate model 610 when given a first hint 651 and generating 708 a second hint-assisted evaluation output 663 representing a performance of the candidate model 610 when given a first and second hint 651, 652. Generating 706 the first evaluation output 661 is performed using the evaluation model 610 and conditioned on the first solution 640, first query 630 and privileged information 650. Generating 707 the first hint-assisted evaluation output 662 is performed using the evaluation model 620 and conditioned on the first query 630 first hint-assisted solution 641 and privileged information 650. Generating 708 the second hint-assisted evaluation output 663 is performed using the evaluation model 610 and conditioned on the first query 630, second hint-assisted solution 642 and privileged information 650.

Beneficially, this process allows the candidate model 610 to attempt to attain a correct solution given hints. Determining how many hints are required to arrive at a desired accuracy of solution (e.g. performance) can provide another metric demonstrating the performance of a candidate model, especially when particularly difficult (e.g. north star) problems are being solved and/or when the candidate model is unlikely to attain an accurate answer without hints.

The method 700 of evaluating a candidate model using progressively more hints can also be applied to more than one candidate model, for example the progressively more hints can be provided to a first candidate model and a second candidate model. In this implementation, the generation 705 of a performance metric may comprise generating separate evaluation outputs for the first and second candidate models given no hints, one hint, two hints etc. Alternatively or additionally, the performance metric generated may include a relative performance of the first and second candidate models. A (non hint-assisted) relative performance may be generated, by the evaluation model 610, conditioned on the evaluation outputs of the first and second model based on no hints being provided, and further conditioned on the query and privileged information. A hint-assisted relative performance for a particular number of hints may be generated, by the evaluation model 610, conditioned on the query and privileged information and further conditioned on the hint-assisted evaluation output associated with the particular number of hints. In this way, the performance of a first and second candidate model can be compared when given no hints, one hint, two hints etc. and as such their performance may be compared in a different way. In particular, this enables model separability, especially when difficult problems are being solved and/or when no candidate model is likely to attain an accurate solution without hints. For example, the first and second candidate model may both generate very inaccurate solutions without hints and with a first hint. However, when given two hints, the first candidate model may generate a more accurate answer than the second candidate model generates given two hints. As such, the first candidate model can be said to be converging on a correct solution more effectively and/or more quickly than the second candidate model.

Following the generation 705 of a performance metric, the method 700 may optionally include performing one or more actions, for example as described above with reference to Figure 2.

The generation of a performance metric given a particular number of hints (e.g. zero hints, one hint, two hints etc.) may be performed in an iteration. The performance metric associated with one or more candidate models when given no hints may be associated with (e.g. generated in) a first iteration. The performance metric associated with one or more candidate models when one hint is given may be associated with (e.g. generated in) a second iteration. Over multiple iterations, different numbers of hints can be provided and a performance metric generated based on iteratively more hints.

The method may further comprise further (e.g. more than two) iterations. In each further iterations, a further piece of privileged information is provided to the evaluation model such that a further evaluation output is generated conditioned on all of the inputs available during the previous iteration and the further privileged information. That is, with each iteration the evaluation model is provided with more privileged information for conditioning its generation of evaluation outputs.

The different iterations may be performed in parallel. That is, the first and second iteration can be performed simultaneously. The first iteration may be performed using first parallel processing hardware and the second iteration may be performed using second parallel processing hardware. In this way, the parallel processing capabilities of a computer may be utilized to evaluate two (or more) models more quickly and efficiently. The term 'iteration' is not to be construed as necessarily successive in time. The first and second iteration (and any subsequent iterations) are separate processes and may be performed sequentially or in parallel.

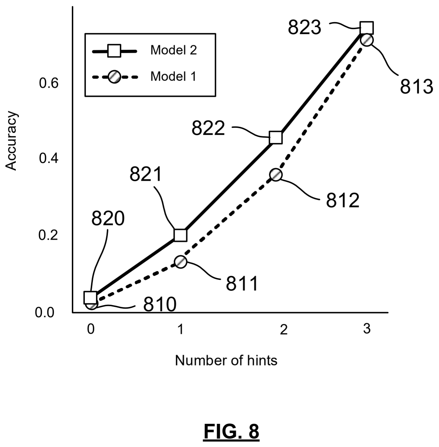

Figure 8 shows a graph illustrating the effect of progressively providing hints on the accuracy of two candidate models. The candidate models are of the same type as those described with reference to Figure 3. That is, both candidate models are LMs. In particular, the LMs are in the Gemini family of models. The first candidate model is a relatively small, lightweight model. The second candidate model is larger than the first candidate model, having been more extensively trained. Each candidate model has been trained to answer math problems. That is, the candidate models are trained to receive an input query and output a solution to the query, conditioned on the query. The models have been trained using training data comprising math problems and associated solutions. The performance of each model is represented in terms of an 'accuracy' when answering frontier math problems (i.e. math problems that are difficult to solve) with datapoints 810, 811, 812, 813 showing the performance of the first model when given 0, 1, 2 and 3 hints and datapoints 820, 821, 822, 823 showing the performance of the second model when given 0, 1, 2 and 3 hints.

For the first and second models, their accuracy is low (near to zero) when provided with no hints. However, as the number of hints increases to 1, 2 and 3, the accuracy of each model increases monotonically. This demonstrates that the hints simplify the problem and allow the models to 'hill-climb'. Furthermore, as progressively more hints are provided, the second model (the larger model) outperforms the first model (the smaller model) when provided with one hint and two hints. When providing three hints, the performance of the two models becomes comparable again. Giving no hints renders the models inseparable because they both find the problem too hard. Giving three hints renders the models inseparable because they both find the problem too easy. However, given one or two hints, the performance of each candidate model is significantly separated, supporting the fact that hints can effectively interpolate the difficulty of frontier problems, helping separate the weaker models from the stronger ones for particular tasks.

Privileged information and hints may be synthesized, for example computer synthesized, e.g. using a synthesis model. The synthesis model may be, for example, a language model (LM). The synthesis model may comprise a neural network. The synthesis model may be trained to receive, as input, a query and output one or more pieces of privileged information and/or hints. The privileged information generated by the synthesis model (e.g. in an automatic synthesis process) may be of the type described above. For example, the synthesis model may be provided with an input image and a request for the synthesis model to generate image descriptions based on the input image, and the synthesis model may generate (output) image descriptions as requested. The synthesis model may further be provided with a ground-truth solution to the query, and the output may be further conditioned on the ground-truth solution.

The methods described herein may further include synthesizing (i.e. generating) privileged information and/or hints. Hints may be derived from privileged information. In the synthesis methods below, specific reference will be made to synthesizing privileged information, but the methods may also be applied to synthesizing hints.

Synthesizing privileged information may comprise generating, using a synthesis model, privileged information. Generating the privileged information may comprise providing, to the synthesis model, an input. The input may comprise the first query. The input may further comprise a request to generate one or more pieces of privileged information. The input may optionally comprise a ground-truth solution to the first query. Generating the privileged information may further comprise generating (outputting) one or more pieces of privileged information using the synthesis model and conditioned on the input. The generation of the privileged information is conditioned based on at least on the first query, and may optionally be further conditioned based on the ground-truth solution and/or the request. The request may include further information regarding the type of privileged information to generate. For example, the request may comprise an explanation of one or more of the types of privileged information as described above and/or a number of desired pieces of privileged information to be output. The request may be referred to as an instruction (or one or more instructions).

The synthesized privileged information (i.e. the output from the synthesis process, i.e. the output from the synthesis model) may be reviewed by human means, i.e. by one or more humans. Additionally or alternatively, the synthesized privileged information may be reviewed by computer implemented means, for example using a reviewer model (e.g. a language model). The reviewer model may receive the one or more pieces of privileged information and a request to qualify the quality (e.g. suitability) of said one or more pieces of privileged information. The reviewer model may further be provided with the first query, a ground-truth solution and/or other privileged information. As such, the privileged information may be automatically synthesized or at least partially automatically synthesized. In other words, privileged information may be generated by a combination of human means and automatic synthesis. Reviewing privileged information (e.g. output by the synthesis model) may comprise editing at least some of the privileged information. For example, if the human and/or synthesis model reviewing a piece of privileged information determines that the piece of privileged information is inaccurate, unhelpful, or otherwise unsuitable, the human and/or synthesis model may make an adjustment to the piece of privileged information to improve its suitability. Editing at least some of the privileged information may be performed if an output of the reviewer model indicates that one or more pieces of privileged information are unsuitable (e.g. if their accuracy or other suitability metric is below a threshold). Editing may be performed on any piece of privileged information which is determined to be unsuitable, or the entire generated set of privileged information may be edited and/or re-generated if any piece of privileged information forming part of the generated set is determined to be unsuitable.

The synthesis of a first piece of privileged information may be performed prior to any evaluation taking place (i.e. prior to a first iteration). Alternatively, pre-existing privileged information may be used for at least the first iteration. Generation of a second piece of privileged information may be performed simultaneously with (e.g. in parallel with, for example on parallel processing hardware) the first iteration. Similarly, generation of further pieces of privileged information may be performed in parallel with further iterations.

The synthesis process (e.g. performed by the synthesis model) may include synthesizing one or more intermediate solutions, also referred to as hints, (i.e. the privileged information generated includes one or more hints). To generate an intermediate solution using the synthesis model, the input to the synthesis model may further include a ground-truth solution to the first query and a request to generate one or more intermediate solutions. In this way, the synthesis model has access to, and so can condition its output on, both the first query and a ground-truth solution and can therefore generate hints or steps of working between the first query and the ground-truth solution. The request may include, for example, a number of intermediate solutions desired, a thinking style, an instruction to not reveal the ground-truth solution in any of the intermediate solutions, or any other information which may be relevant to the generation of intermediate solutions. The hints output by the synthesis model can be used, for example in the methods described with reference to Figures 6, 7 and 8.

It should be understood that, in embodiments where hints are provided to one or more candidate models for the purpose of generating hint-assisted solutions, the privileged information provided to the evaluation model for the purposes of evaluating said hint-assisted solutions is not the same as the hints. That is, while the hints are provided to the one or more candidate models, different privileged information is provided to the evaluation model in order to aid its evaluation process. Therefore there exists privileged information (consisting of hints) which is available to the candidate models, as well as privileged information upon which the generation of a performance metric is conditioned which is not available to the candidate models.

## Use with multimodal data

In some implementations, one or more of the first query, first solution and second solution may comprise multimodal data. The first query may be referred to as input data. The first and/or second solution may be referred to as output data. The candidate model(s) may comprise multimodal models, for example multimodal machine learning models.

The first query may comprise an image and the first and/or second solution may comprise a caption describing the image. The first query may comprise audio data and the first and/or second solution may comprise a transcription of the audio data. The first query may comprise a video and the first and/or second solution may comprise a caption describing the video. That is, the methods herein may be used for image processing (e.g. image captioning), audio processing (e.g. audio transcription) and/or video processing (e.g. video understanding) tasks.

The methods can be used to perform an image processing task. Performing the image processing task can comprise providing a still or moving image to a candidate model trained to perform image processing. Pixels of the image are processed using the model to perform the image processing task. The training data for training the model can similarly comprise still or moving images. The training is performed by processing pixels of the image through the model. In some implementations a still or moving (video) image processed by the model, either during or after training, or both, may be an image that has been captured by a camera, i.e. that has been captured from the real world. Elements of the image data may comprise monochrome or color pixels of the image or video. The image may be a 2D or 3D image. As defined herein an "image" includes a point cloud e.g. from a LIDAR system, and a "pixel" includes a point of the point cloud. Similarly references to a moving image or video include a time sequence of point clouds. Objects in the image or video may comprise objects, e.g. physical objects, represented by the image or video.

As one example, the candidate model(s) can be used to perform a still or moving image classification task (zero-shot). For example to classify an image into one of a plurality of classes, e.g., as a pickup truck, car, or van the global text embedding can be determined for each of a set of words or sentences that describe the image as belonging to a different respective class, e.g. "this is a photograph of a pickup truck", and so forth. The global image embedding can be determined for the image, and the class of the image can be determined from the word or sentence that has a global text embedding that is most similar to the global image embedding. A similar approach may be used to classify actions in moving images, e.g. gestures; and to perform a multi-label classification.

The task that the candidate model is used to perform may generally correspond to a type of the training data item. The type of data which comprises the training data items, as well as the data items in use (i.e. queries (e.g. first query) and solutions (e.g. first and second solutions)) may correspond to a type of data. The type of data may be referred to as a data modality. For example where the training data item comprises an audio data item, an image data item, a multimodal data item, a text data item, or a graph data item, the trained machine learning model, or part thereof, may be used, correspondingly, to process input data comprising audio data, image data, multimodal data, text data, or graph data respectively to perform an audio signal processing task, an image processing task, a multimodal processing task, a text processing task, or a graph processing task

As one example the training data item, and input data (e.g. the first query), may comprise audio data representing values of a digitized audio waveform, e.g. a time sequence of waveform-representing elements. Such a representation may comprise, e.g., samples representing digitized amplitude values of the waveform or a time-frequency domain representation of the waveform such as a STFT (Short-Term Fourier Transform) or MFCC (Mel-Frequency Cepstral Coefficient) representation. The audio waveform may comprise e.g. a speech waveform or a waveform of a sound, e.g. a captured sound. As some examples of transformations that may be used, transformed views of the training data item may be obtained by transformations including: time or pitch warps; random crops in the time or frequency domain, e.g. selections of portions of the audio data item with random start and end times or with randomly selected upper and lower frequencies; modifications to the amplitude of a data item e.g. by randomly increasing or diminishing the amplitude of the audio; or modifications to the frequency characteristics of the audio e.g. by randomly filtering the audio. Objects in the audio may comprise e.g. speech elements such as words, syllables, or phonemes; or events or other distinguishable audio objects in the sound.

The audio signal processing task may comprise, e.g.: processing audio data representing speech to provide output data that detects words or phonemes in the speech or categorizes words or phonemes in the speech into one or more of a plurality of categories; or processing audio data representing a sound to provide output data, e.g. likelihood data, that detects presence of a particular sound or audio object or event in the sound e.g. in a hotword detection or identification task; or processing audio data representing a sound to provide output data that categorizes a content of the sound into one or more of a plurality of categories (i.e. classifying a sound). In some further examples the audio signal processing task may comprise, e.g.: an identification or classification task such as a speech or sound recognition task, e.g. a hotword detection or identification task, a speaker or natural language classification task, or an audio tagging task, in which case the output data may comprise a category score or tag for the audio or for a segment of the audio; or a similarity determination task e.g. an audio copy detection or search task, in which case the output data may comprise a similarity score.

In some implementations the training data item, and input data, may comprise sensor data representing values of a digitized sensor waveform i.e. a sensor other than an audio sensor may be used to obtain the digitized waveform. The digitized sensor waveform may be treated similarly to a digitized audio waveform, and the transformed views may correspond with those described above. The sensor data may generated by sensors configured to monitor the real-world state, condition or environment of a physical system, e.g. of a mechanical or electronic physical system or machine, e.g. sensing force, pressure, movement, temperature, or vibration. The objects may comprise events or other distinguishable objects in the sensor data, or conditions of the physical system. The signal processing task may be to process the input data to provide output data that identifies the presence of one or more of the events, objects, conditions or environments

Any aspects of any of the above-described examples may be combined, especially where like-terms such as privileged information, intermediate solutions, ground-truth solutions, synthesis model, evaluation model, reviewer model, queries, solutions etc. are used.

As another example the training data item, and input data, may comprise image data representing a still or moving image, i.e. an image or video, e.g. an image or video that has been captured using a camera. Elements of the image data may comprise monochrome or color pixels of the image or video. As defined herein an "image" includes a point cloud e.g. from a LIDAR system, and a "pixel" includes a point of the point cloud. Similarly "video" includes a time sequence of point clouds. Objects in the image or video may comprise objects, e.g. physical objects, represented by the image or video.

The image processing task may comprise, e.g.: processing the image data to provide output data that identifies the location of one or more specified or unspecified objects in the image or video, e.g. output data that defines one or more object bounding shapes or boxes; or processing the image data to provide output data that segments pixels of the image or video into regions that represent one or more objects in the image or video signal; or processing the image data to provide output data that categorizes a content of the image or video into one or more of a plurality of categories; or processing the image data to provide output data that predicts depth values for pixels of the image or video. A task that segments the pixels, e.g. a semantic segmentation task, can associate each pixel with a category representing a class of objects, or an instance segmentation task that associates each pixel with a category representing an instance of an object, i.e. to distinguish between different instances of the same category of object. For example a medical image may be processed to label pixels of the medical image in accordance with which region of a human or animal body they show, or to identify pixels of the medical image in which a particular medical condition is present.

Where the image data comprises pixels of a video the image processing task may comprise, e.g.: processing the image data to provide output data that identifies the location of one or more actions represented in the video; or processing the image data to provide output data that categorizes one or more actions, e.g. gestures, represented in the video into one or more of a plurality of categories.

In general the image processing task may include any sort of image processing or vision task such as an image classification or scene recognition task, an image segmentation task e.g. a semantic or instance segmentation task, an object localization or detection task, or a depth estimation task. When performing such a task the input data may be derived from pixels of the image. For an image classification or scene recognition task the output may comprise a classification output providing a score for each of a plurality of image or scene categories e.g. representing an estimated likelihood that the image data or an object represented in the image data, or that an action within image data representing a video, belongs to a category of a set of categories. For an image segmentation task the output may comprise, for each pixel, an assigned segmentation category or a probability that the pixel belongs to a segmentation category, e.g. to an object or action represented in the image or video. For an object localization or detection task the output may comprise data defining coordinates of a bounding box or region for one or more objects represented in the image. Such a bounding box or region may be defined in two, three or more dimensions (time counting as a dimension). For a depth estimation task the output may comprise, for each pixel, an estimated depth value. The output may define a continuous value or it may define a probability distribution over discrete depth value buckets, such that the output pixels define a (spatial 3D) depth map for the image. Such tasks may also contribute to higher level tasks, e.g. to object tracking across video frames; or to gesture recognition i.e. recognition of gestures that are performed by entities depicted in a video. As another example, the image processing task may include an image keypoint detection task in which the output comprises the coordinates of one or more image keypoints, such as landmarks of an object represented in the image, e.g. a human pose estimation task in which the keypoints may define the positions of body joints. A further example is an image similarity determination task, in which the output may comprise a value representing a similarity between two images, e.g. as part of an image search task.

As another example, in a pose estimation task, the pixel values may map the pixels to a 3D surface, e.g. of a human body or face. Or the pixel values may estimate a 6D pose representing translation and orientation components of an object in the image, e.g. in quaternion form. The set of pixel values for the image can estimate the pose of one or more objects in the image.

As another example, in a surface normal estimation task the pixel values for the image may comprise a vector in, e.g., three dimensions defining a surface normal. The set of pixel values for the image can provide a surface normal map for one or more objects in the image, e.g. for use in an augmented reality or other application.

As another example the input data, may comprise text data; elements of the text data may comprise e.g. sentences, words, or parts of words e.g. wordpieces. The text processing task may comprise, e.g.: a part-of-speech tagging task, in which case the output data may comprise e.g. a category score or tag for the text or for a segment of the text; or a dependency parsing task, in which case the output data may comprise data representing a dependency parse of the text; or a text segmentation task, in which case the output data may comprise data that associates elements of the text with one or more of a plurality of categories for the text. Other example tasks include an identification or classification task, or a similarity determination task, e.g. to generate a category score, a similarity score, or a tag as described above; or a machine translation task.

As another example the training data item, and input data, may comprise multimodal data. In general such multimodal data is a combination of two or more different types of data, where the different types of data represent the same or overlapping objects using the different modalities (types). As one example the multimodal data may comprise audio-visual data, comprising a combination of pixels of an image or of video and audio data representing values of a digitized audio waveform. As another example the multimodal data may comprise a combination of i) text data representing text in a natural language and ii) pixels of an image or of video or audio data representing values of an audio waveform. Elements of the multimodal data may correspond to elements of the data types making up the combination. Optionally, but not necessarily, when processing multimodal data the data may be mapped into a common embedding space.

In general the multimodal processing task may correspond to any of the tasks previously described for any of the types of data making up the multimodal combination. For example, an accuracy of the previously described tasks may be increased when the task is applied to multimodal data combining the data for which the task has been previously described and another type of data. For example detection or classification of an object or event may be improved when data of multiple different types (modalities) is processed.

As one particular example, where the multimodal data comprises audio-visual data the multimodal processing task may comprise: processing the combination, i.e. the image/video and audio, to provide output data that detects presence of a particular multimodal object or event in the combination (e.g. to identify a phoneme or viseme when lip reading); or processing the combination to provide output data that categorizes the combination into one or more of a plurality of categories, e.g. by defining a score for each category of a plurality of possible categories for the combination. As another particular example, where the multimodal data comprises a combination of text data and image or video or audio data the multimodal processing task may comprise processing the combination to provide output data that defines whether the image or video or audio waveform is described by the text, e.g. by a particular caption, e.g. by defining a score for the text or caption.

As another example the training data item, and input data, may comprise graph data; in such implementations the candidate model described herein may comprise graph neural networks. In general the graph data may define a graph structure having a set of nodes with associated node feature vectors connected by edges which may have associated edge feature vectors. A graph may, but need not be, defined by an adjacency matrix e.g. where N is the number of nodes, an $N \times N$ matrix defining which nodes are connected by edges. Elements of the graph data may comprise e.g. nodes or edges of a graph represented by the graph data.

A graph may represent a real-world physical system; merely as some examples, a mechanical structure in which bodies are connected by joints, or a structure of a molecule such as a drug molecule. The objects may comprise e.g. physical bodies or parts of a molecule e.g. chemical moieties. The graph processing task may comprise e.g.: characterizing a physical entity represented by the graph to provide output data that defines a predicted stability of the physical structure or molecule, or the binding affinity of a molecule represented by the graph with another molecule e.g. to identify a drug candidate (which may then be evaluated by synthesizing the molecule and e.g. testing the molecule in vitro or in vivo). The predicted stability of the physical structure may be used e.g. to design or evaluate a structure; the result may then be used to construct a structure to the design. As another example the graph may be a scene graph that represents a scene; the scene graph may have been generated from a captured real-world image. The graph processing task may then comprise generating output data that identifies or classifies the scene or one or more objects within the scene e.g. to facilitate object/scene editing or information extraction for scene interpretation.

In some applications the candidate models may comprise one or both of a trained image encoder neural network and a trained text encoder neural network, each configured to output a respective embedding. In general the image encoder neural network is configured to receive an input comprising pixels of a still or moving image, and to process the input, in accordance with the trained parameters of the neural network, to generate as an output a set embeddings for the image. Throughout this specification, an "embedding" of an entity (e.g., an observation of an environment) can refer to a representation of the entity as an ordered collection of numerical values, e.g., a vector or matrix of numerical values.

In general the text encoder neural network is configured to receive an input comprising text defining a sequence of text tokens from a vocabulary of tokens, and to process the input, in accordance with the trainable/-trained parameters of the text encoder neural network, to generate as an output the sequence of token embeddings for the text.

As an example the visual encoder neural network and/or the text encoder neural network may comprise a Transformer neural network. For example the visual encoder neural network may have an architecture similar to a vision transformer neural network, and the text encoder neural network may comprise an encoder-only, encoder-decoder, or decoder-only Transformer neural network.

In general a multimodal machine learning model has a multimodal input configured to receive a first multimodal input and a second multimodal input. As used herein a "modality" refers to a type of data, and thus a multimodal machine learning model is one that can process multiple different types of data.

The first multimodal input may comprises a text input to receive a sequence of text. The second multimodal input may be configured to receive a different type of input data, e.g. it may comprises a visual input to receive an image or video. Alternatively the second multimodal input may be configured to receive, e.g., audio data representing values of an audio waveform, e.g. instantaneous amplitude data or time-frequency domain data; or data representing observations (not necessarily visual) of an environment with which an agent controlled by the multimodal machine learning model interacts. In some implementations there may be more than two different multimodal inputs, each configured to receive a different type of data.

The multimodal machine learning model may be configured to jointly process an encoded version of the text and an encoded version of the second multimodal input, e.g. of the image or video, to generate a model output that defines a result of a machine learning task. A few examples of machine learning tasks that can be performed by such a multimodal machine learning model are described later.

The text received may comprise text in one or more natural languages, or text in a computer language, or both. The computer language may be any formal language used to communicate with a computer, e.g. a markup language, or a command or configuration language, or a data exchange language such as JSON, or a programming language. The text may be received, e.g., as a series of encoded characters, e.g. UTF-8 encoded characters; such "characters" can include Chinese and other similar characters, as well as logograms, syllabograms and the like.

The multimodal model can include a text encoder that processes the sequence of text to represent the text as a series of text tokens from a vocabulary of text tokens, e.g. that each represent words, wordpieces or characters in a natural or computer language.

Where the second multimodal input comprises an image or video it may comprise image data defining color or intensity values for pixels of a still or moving image in one, two, or three dimensions. As used herein "image" includes a LIDAR point cloud, and the image data may also or instead define the locations of points of a still or moving point cloud. As another example, an image or video received by the second multimodal input may comprise a neural 3D representation, e.g. that represents a 3D scene as a set of latent feature vectors, e.g. a neural radiance field representation. The multimodal machine learning model can include second multimodal input encoder that processes the second multimodal input, e.g. using one or more convolutional, attention, fully connected, or recurrent layers, to generate the encoded version of the second multimodal input. In general such an encoder may implement any form of encoding appropriate for the type of data to be encoded. Merely as an example, where the second multimodal input comprises an image or video this may be encoded, e.g., as features for each of a set of patches that tile the image, or as a sequence of visual tokens selected from a vocabulary of visual tokens, or as a representation of distinct objects in the visual input. Such visual tokens may, but need not be, interleaved with text tokens processed by the model.

The model output may comprise any form of output appropriate to the machine learning task performed by the multimodal machine learning model. For example the model output may comprises text in a natural or computer language that defines a result of the task, e.g. for tasks such as image captioning, visual question answering, or object detection or instance segmentation. Also or instead the model output may comprise data defining an image, video or audio object, e.g. in a generative task; or the model output may comprise non-textual action selection data for selecting an action to be performed by an agent controlled by the model. As another example the model output may also or instead define an intermediate step to be performed during the task, e.g. a call to a software API for a software tool that is used when performing the task; the multimodal input may then receive an output from the software tool that is used to generate a final model output that performs the task. A few particular examples of model output are given later.

Such a multimodal model can be trained using very large (but possibly noisy) datasets in which text is paired with an image and/or with one or more other types of data, e.g. audio data, or data relating to the operation of an agent acting in an environment to perform a variety of tasks. Such a model is can be trained, e.g., using self-supervised learning. The pairing can often be imperfect, and the training dataset can, but may not, include any actual examples of a particular task to be performed, but nonetheless an ability to perform a particular task can emerge. There are many examples of suitable, publically available training datasets.

Some example multimodal machine learning models with which the techniques described herein may be used include: Flamingo (Alayrac et al. arXiv:2204.14198); ALIGN (Jia et al., arXiv:2102.05918); PaLI (Chen et al. arXiv:2209.06794); and PaLI-X (Chen et al. arXiv:2305.18565).

In some implementations, the second multimodal input can include an observation characterizing an environment of an agent performing a task, e.g. a mechanical agent or software agent. The observation may characterize the environment at a particular time step and the model output may define one or more actions to be performed by the agent at the time step. For example each action may be expressed as a sequence of text, e.g. as one or more characters such as letters and numbers, that represents the action, or as text that defines a low-level "skill" from a set of skills; or the model output may, e.g., define parameters of a probability distribution from which an action is selected. Optionally the text received by a text input may include text describing the task to be performed. Optionally the text input may include a description of one or more actions performed at a preceding time step. Where the agent is a software agent the model output may comprise a text output for calling a software API at a time step, and the model input at a subsequent time step, e.g. the text input, may comprise a response from the software agent, e.g. from the API.

Some examples of multimodal machine learning models controlling an agent, and with which the techniques described herein may be used, are described in: PaLM-E (Driess et al. arXiv:2303.03378); RT-1 (Brohan et al. arXiv:2212.06817); and RT-2 (Brohan et al. arXiv:2307.15818).

Such a multimodal machine learning model can have an audio input, or an agent action input to receive agent action data representing an action of an agent performing a task in an environment. Data received in this way may be jointly processed with data from a text input and from a second multimodal input to generate the model output.

Such a multimodal machine learning model has a multimodal input and can, in implementations, perform a range of different tasks. However in implementations not every task that the model performs requires a multimodal input, e.g. a task to generate an image from a text description of the image, or an image captioning task. In some implementations, after training, the text input can be used to specify a particular task that is to be performed by the multimodal machine learning model, e.g. by providing a "prompt" to the model describing the task to be performed or giving an example of the task as a prompt to the model. Such prompts may optionally be included in the training data.

The multimodal machine learning model is configured to process the multimodal input in accordance with the trainable parameters of the multimodal machine learning model, to generate a model output that defines a result of one or more machine learning tasks. A training system can include a training engine to train the multimodal machine learning model, i.e. to update values of the trainable parameters , to perform the machine learning task(s), using training data items stored in one or more training datasets.

In general each training data item comprises multimodal data for use in training the multimodal machine learning model, e.g. using a self-supervised training objective. There are many different types of self-supervised objective function that may be used. As one example the model may be trained using a softmax cross entropy loss, e.g. using language model style teacher forcing with a softmax cross entropy loss. As another example the model may be trained with an autoregressive negative log likelihood (NLL) loss, such as $-\sum_{l=1}^{L} \log p(y_l | y_{<l}, x_{\leq l})$ for a multimodal input comprising a sequence of text encoded as $L$ tokens with the $l$th text token $y_l$ conditioned on preceding second modality inputs $x_{\leq l}$, such as one or more images or videos, and conditioned on preceding text tokens $y_{<l}$. As another example the model may be trained with a masking loss, e.g. a loss that requires the model to predict masked-out data such as masked out text tokens. As another example the multimodal machine learning model can be trained using a self-supervised objective function that comprises a contrastive loss function (one that is dependent upon a positive example and one or more negative examples).

As another example such a multimodal machine learning model can also or instead be trained using a reinforcement learning objective, e.g. when the model is used to control an agent to perform a task. The methods of training described herein are particularly suited for reinforcement learning, where the process of exploration is decoupled from the process of learning. In reinforcement learning, prioritizing training examples from which the model will learn more can result in more efficient training.

Each training data item may comprise, e.g., an example sequence of text and an example of the second modality input, e.g. an example image or video; in general these are semantically related to one another (but not always, as the training dataset may be noisy). As an example, matched, text and image or video data and may be obtained from web pages, e.g. from images or videos and their corresponding alt-text (text from the HTML or XHTML alt attribute); or from web pages where images or video and text are interleaved with one another. One example of such a dataset is WebLI (Web Language Image, Chen et al. arXiv:2305.18565v1). Training datasets for other types of second modality input can similarly be obtained from web pages. Such training datasets can be large, e.g. > $10^7$, $10^8$ or $10^9$ items.

Also or instead, smaller but more specialized training datasets can be used, e.g. to fine tune a model for a particular task or tasks. A few examples for visual tasks are the Visual Genome dataset for Visual Question Answering (Krishna et al., arXiv:1602.07332); Objects365 (Shao et al., "Objects365: A large-scale, high-quality dataset for object detection", IEEE/CVF international conference on computer vision, pages 8430-8439); Open Images V4 (Kuznetsova et al., arXiv:1811.00982); the SBU dataset (Ordonez et al. "Im2Text: Describing Images Using 1 Million Captioned Photographs", Neur-IPS 2011); the Conceptual Captions datasets, e.g. V1 (2M images) or V2 (10M images) (Sharma et al., "Conceptual Captions: A Cleaned, Hypernymed, Image Alt-text Dataset For Automatic Image Captioning", ACL 2018); and Kinetics for video (Kay et al., ar-Xiv:1705.06950). An example task-specific training dataset for audio data is AudioSet (Gemmeke et al., "Audio set: An ontology and human-labeled dataset for audio events," ICASSP, IEEE, 2017, pp. 776-780). An example task-specific training dataset for agent (robot) control is described in Ebert et al., arXiv:2109.13396.

In general a multimodal machine learning model can be trained to perform any sort of machine learning task or tasks. After the multimodal machine learning model has been trained it can be deployed for use in performing the machine learning task(s). For instance, the machine learning model can be deployed in an environment that enables users to provide requests for the machine learning model to process specified multimodal inputs to generate corresponding model outputs. Users can provide the requests, e.g., by way of a user interface or through an application programming interface (API). The requests can be transmitted from a user device (e.g., over a data communication network, e.g., the internet) to one or more computers implementing the machine learning model, e.g., in a data center. The machine learning model can process multimodal inputs specified by user requests to generate corresponding model outputs, and then transmit the model outputs to user devices (e.g., over a data communication network).

In some implementations, after training, a particular task that is to be performed by the multimodal machine learning model can be described by part or all of the sequence of text in the multimodal input to the model. For example in a multimodal input that includes an image, video, or audio item such a prompt might specify "Generate a caption", "Generate a description", "Answer the following question: [about the image, video, or audio item]", or "Detect a person". Where the model is used for an agent control task a prompt may define "Take the knife out of the drawer", or "Q: What action should the robot take to take the knife out of the drawer?". Also or instead such a prompt may give one or more examples of a task to be performed. A multimodal machine learning model can be trained on multiple natural and/or computer languages and the prompt may then specify a language to use.

A few examples of some machine learning tasks that can be performed by a model trained as described herein follow.

For some tasks the second modality input represents an image or video as previously described, e.g. from a camera or other imaging device that captures the image or video from a real-world environment, and/or audio, e.g. audio data such as speech or other sounds captured from a real-world environment. In general the tasks described below may be tasks that require spatial awareness or other context from the image, video, or audio item. For example, a prompt may ask "What is the object in the top left corner?", or "What was the answer to the spoken question?".

As one example the task may comprise an object or action detection task. A task-specific training data item may comprise an image, video, or audio item containing one or more objects or actions, and a sequence of text. The sequence of text may describe or otherwise label the object(s) or action(s) and (for an image or video) may include text giving bounding box coordinates for the object(s) or action(s). After training, when the model is used in inference, the model output 122 may comprise or represent text that describes or otherwise labels detected object(s) or action(s) in the second modality input, and may (for an image or video) include bounding-box coordinates for the detected object(s) or action(s), e.g. "10 20 90 100 cat 20 30 100 100 dog".

As another example the task may comprise a classification task, e.g. an object or action classification task. A task-specific training data item may comprise an image, video, or audio item containing one or more objects or actions and a sequence of text. The sequence of text may describe or otherwise classify the object(s) or action(s). After training, when the model is used in inference, the model output may comprise data, e.g. text, that classifies the object(s) or action(s) in the second modality input into one of a plurality of classes.

As another example the task may comprise an image, video, or audio item describing task, e.g. a captioning task (which, as used here, includes an audio description task to explain what is happening in a video). A task-specific training data item may comprise an image, video, or audio item and a sequence of text describing the image, video, or audio item. After training, when the model is used in inference, the model output may comprise data, e.g. text, describing an image, video, or audio item in the second modality input. For example the model output may provide a caption or description for a second modality input item, or it may count objects in the second modality input item, or it may provide some other form of description of the second modality input item.

As another example the task may comprise an image, video, or audio question-answering task. A task-specific training data item may comprise an image, video, or audio item and a sequence of text that describes the image, video, or audio item. After training, when the model is used in inference, the model output may comprise data, e.g. text, that answers a question about the second modality input specified in a prompt sequence of text, e.g. as described above. This may be used, e.g., to answer questions about visual plots and charts or about sounds.

As another example the task may comprise a character or word recognition task, e.g. an OCR (optical character recognition) task. A task-specific training data item may comprise an image, video, or audio item and a sequence of text that includes text that is depicted in the image or video, or that is represented as speech in the audio item. After training, when the model is used in inference, the model output may comprise text that represents characters or words in the second modality input, e.g. in a natural language.

As another example the task may comprise a still or moving image or audio generation task. A task-specific training data item may comprise an image, video, or audio item and a sequence of text that describes the image, video, or audio item. After training, when the model is used in inference, the model output may comprise data for an image, video, or audio item, e.g. image data defining values for pixels of a still or moving image or audio data representing values of an audio waveform, and the sequence of text in the multimodal input to the model may describe or characterize the image, video, or audio item to be generated.

As another example the task may comprise a computer language text generation task. A task-specific training data item may comprise an image, video, or audio item and a sequence of text in a computer language for generating the image, video, or audio item. After training, when the model is used in inference, the model output may comprise text in the or another computer language for generating or rendering an image, video, or audio item in the second modality input, e.g. a web page, plot, or chart.

In another example of a computer language text generation task a task-specific training data item may comprise an image, video, or audio item and a sequence of text in a computer language for performing a task in relation to the image, video, or audio item, e.g. a data processing task that involves analyzing the content of the image, video, or audio item to provide a result of the analysis or, e.g., a search to search for information relating to the content of the image, video, or audio item. The computer language in the model output may comprise computer language for invoking a function or calling one or more external APIs. Merely as one example, such an output may be formatted as a JSON object. As previously, the sequence of text in the multimodal input may define the task to be performed and the second modality input may comprise, e.g. an image, video, or audio item in relation to which the task is to be performed, e.g. a task that involves manipulation of particular types of data that may benefit from access to an API such as mathematical data, date/time related data, scientific data, recent data that may post-date training of the model (that may be accessed by a search function or API), and so forth. After training, when the model is used in inference, the model output may comprise text in the or another computer language for performing a task, e.g. as described above, in relation to an image, video, or audio item in the second modality input. The method may then include using the text in the computer language to perform the task.

In general where the model output comprises text this may be provided as speech representing the text.

In some implementations the machine learning task comprises an agent control task in which the agent interacts with an environment to perform the agent control task. In these implementations the multimodal input includes an observation characterizing the environment. For example the multimodal input can include a sequence of text that defines the task to be performed by the agent and the second modality input can represents an image, video, audio, or other observation of the environment, e.g. captured by a camera or other imaging device, or by a microphone, from a real-world environment. A task-specific training data item may comprise a sequence of text representing one or more actions of the agent, and a second modality input representing an observation of the environment. After training, when the model is used in inference, the model output comprises an action selection output, e.g. including text, that is used to select one or more actions to be performed by the agent in the environment in response to the observation. As an illustration the model output 122 may define an action as text such as "A: 132 114 128 5 25 156", that can be converted into a control signal for a mechanical agent, such as a robot, e.g. "$\Delta T$ = [0.1, -0.2,0] $\Delta R$ = [10°, 25°, -7°]". As another example the action selection output may also or instead define one or more low-level skills, e.g. from a vocabulary of previously learnt skills. As before, the sequence of text in the multimodal input to the model may describe the task to be performed, e.g. "What action should the robot take to [perform task]".

In some agent control implementations, the environment is a real-world environment and the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot or other mechanical agent interacting with the environment to accomplish a specific task, e.g., to locate or manipulate an object of interest in the environment or to move an object of interest to a specified location in the environment or to navigate to a specified destination in the environment. In these implementations, the observations may include, e.g., one or more of: images, object position data, and sensor data to capture observations as the agent interacts with the environment. The actions may define control signals to control the robot or other mechanical agent, e.g., positions, torques, or other control signals for the parts of the mechanical agent, or higher-level control commands.

In some agent control implementations the agent can be a software agent, i.e. a computer program, configured to perform a task. Some examples where the agent is a software agent now follow.

As one example the environment may be an integrated circuit design and the task may be a routing task for routing interconnection lines of the integrated circuit. The observations may be of component positions and/or interconnections, and the actions may comprise component placing or interconnect routing actions. An integrated circuit with interconnection lines routed as determined may then be fabricated.

As another example the environment may be a real-world computing environment and the task may be to manage the distribution of jobs or tasks across computing resources e.g. on a mobile device and/or in a data center. The observations may include observations of computing resources such as compute or memory capacity, or Internet-accessible resources, or that relate to the operation of the computing resources in processing the jobs or tasks; and the actions may include assigning jobs or tasks to particular computing resources.

As another example the environment may be a real-world computing environment and the task is to manage the processing, e.g. by one or more real-world servers, of a queue of continuously arriving jobs. The observations may comprise observations of the times of departures of successive jobs, or the time intervals between the departures of successive jobs, or the time a server takes to process each job, or the arrival times, or time intervals between the arrivals, of successive jobs, or data characterizing the type of job(s). The actions may comprise actions that allocate particular jobs to particular computing resources.

As another example the environment may comprise a real-world computer system or network and the task may be to maintain security of the computer system or network. The observations may comprise any observations characterizing operation of the computer system or network, and the actions may comprise actions to control the operation e.g. to limit or correct abnormal or undesired operation e.g. because of the presence of a virus or other security breach.

As another example the environment may comprise a data packet communications network environment, and the task may be to route packets of data over the communications network. The actions may comprise data packet routing actions and the observations may comprise, e.g., observations of a routing table which includes routing metrics such as a metric of routing path length, bandwidth, load, hop count, path cost, delay, maximum transmission unit (MTU), and reliability.

In some agent control implementations the agent may be a human agent and the environment may be a real-world environment. For example the agent can be a human user of a digital assistant such as a smart speaker, smart display, or some other device that is used to instruct the user to perform actions. The task may be any real-world task that the user wishes to perform. The observations may be obtained from an observation capture subsystem, e.g. a monitoring system such as a video camera or sound capture system, to capture visual and/or audio observations of the user performing the task. The actions may comprise instructions in the form of, e.g., text, image, video, or audio data such as speech, that guide the user in performing the task.

In another example, a system comprises one or more computers and one or more storage devices communicatively coupled to the one or more computers. The one or more storage devices store instructions that, when executed by the one or more computers, cause the one or more computers to perform the operations of any of the methods described herein. The storage devices may be implemented separately from the computers. That is, in another example, one or more non-transitory computer storage media store instructions that, when executed by one or more computers, cause the one or more computers to perform the operations of any of the methods described herein.

The one or more computers may comprise parallel processing hardware. For example, the one or more computers may comprise at least a first parallel processor and a second parallel processor. As such, the system may be operable to perform steps of the above-described methods in parallel. Such parallel processing and its relevance to various steps of the above-described methods is described in more detail above.

Where reference is made to 'providing an indication', such an indication can be provided in many ways that will be known to the skilled person. For example, an indication can be provided in the form of text, image, audio or haptic feedback or any combination therefore. The indication can be provided using a computer, for example a personal user device such as a smart phone, tablet or smartwatch. The indication may be combined with computer instructions which cause a computer to perform a task, such as the task of initiating further training. Associated tasks may be, for example, taking a candidate model offline (e.g. if the evaluation indicates a sub-standard performance) such that users cannot provide further queries to the model, at least until further training and/or further evaluation has occurred.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. For example, where an indication is provided (e.g. indicating that further training is required), such input can be provided using such a display device. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Similarly, indications (e.g. indications regarding further training) can be provided to the user using many methods including acoustic, speech, or haptic input. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The present techniques have been devised to exploit the ability of modern computer systems to perform highly parallel processes, to take advantage of parallel computing hardware, and the benefits that using such hardware can bring. The methods can be implemented in a parallel processing system comprising a plurality of sets of hardware devices. Each set of hardware devices comprises one or more hardware computing devices or processors, and the sets of hardware devices and/or processors are configured to operate in parallel.

## Claims

1. A computer-implemented method comprising:

   obtaining a first solution generated by a candidate model using a first query, wherein the first query comprises an image and an image processing task, an audio signal and an audio processing task or sensor data and a signal processing task, and the first solution comprises an answer to the image processing task, audio processing task or signal processing task;
   generating a performance metric, using an evaluation model and conditioned on the first query, first solution and privileged information, wherein the performance metric comprises an evaluation output representing a performance of the candidate model;
   wherein the privileged information was not available to the candidate model when generating the first solution.

2. The method of claim 1, wherein the candidate model is a first candidate model and the evaluation output is a first evaluation output, the method further comprising obtaining a second solution generated by a second candidate model using the first query, wherein the second solution comprises an answer to the image processing task, audio processing task or signal processing task;

   wherein generating the performance metric further comprises using the evaluation model conditioned on the first query, the second solution and the privileged information, and wherein the performance metric comprises a second evaluation output representing a performance of the second candidate model, and optionally further comprises a relative performance of the first and second candidate models;
   wherein the privileged information was not available to the second candidate model when generating the second solution.

3. A computer-implemented method comprising:

   obtaining a first solution generated by a first candidate model using a first query, wherein the first query comprises an image and an image processing task, an audio signal and an audio processing task or sensor data and a signal processing task, and the first solution comprises an answer to the image processing task, audio processing task or signal processing task; obtaining a second solution generated by a second candidate model using the first query, wherein the second solution comprises an answer to the image processing task, audio processing task or signal processing task; generating a performance metric, using an evaluation model and conditioned on the first query, first solution, second solution and privileged information, wherein the performance metric comprises a relative performance of the first and second candidate models; wherein the privileged information was not available to the first candidate model when generating the first solution and was not available to the second candidate model when generating the second solution.

4. The method of any preceding claim, further comprising:

    obtaining one or more hints, each hint comprising an intermediate solution between the first query and a ground-truth solution; and obtaining a first hint-assisted solution generated by providing the first query and a first hint of the one or more hints to the first candidate model; wherein generating the performance metric further comprises using the evaluation model conditioned on the first query, first hint-assisted solution and privileged information, the performance metric comprising a first hint-assisted evaluation output representing a performance of the first candidate model when given a first hint.

5. The method of claim 4, further comprising:

    obtaining a second hint-assisted solution generated by providing the first query and the first hint of the one or more hints to the second candidate model; wherein generating the performance metric further comprises using the evaluation model conditioned on the first query, second hint-assisted solution and privileged information, and wherein the performance metric comprises a second hint-assisted evaluation output representing a performance of the second candidate model when given a first hint; and optionally wherein the performance metric further comprises a first hint-assisted relative performance representing a relative performance of the first and second candidate models when given a first hint.

6. The method of claim 3, further comprising:

    obtaining one or more hints, each hint comprising an intermediate solution between the first query and a ground-truth solution; obtaining a first hint-assisted solution by providing the first query and a first hint of the one or more hints to the first candidate model; obtaining a second hint-assisted solution by providing the first query and the first hint of the one or more hints to the second candidate model; wherein generating the performance metric further comprises using the evaluation model conditioned on the first query, first hint-assisted solution, second hint-assisted solution and privileged information, and wherein the performance metric comprises a first hint-assisted relative performance representing a relative performance of the first and second candidate models when given a first hint.

7. The method of claim 5 or 6, further comprising:

    obtaining one or more further hint-assisted solutions generated by providing the first query, the first hint and one or more further hints of the one or more hints to the first and second candidate models; and wherein generating the performance metric further comprises iteratively generating one or more further hint-assisted performance metrics representing the performance of the first and/or second candidate models when given iteratively more hints, and wherein generating the one or more further hint-assisted performance metrics comprises using the evaluation model conditioned on the first query, privileged information, first hint, one or more further hints and respective further hint-assisted solutions.

8. The method of any of claims 2 to 7, wherein a plurality of the first evaluation output, second evaluation output, first hint-assisted evaluation output, second hint-assisted evaluation output, first hint-assisted relative performance and one or more further hint-assisted performance metrics are generated in parallel.

9. The method of any preceding claim, further comprising, based on the performance metric:

    providing a further query to the first and/or second candidate model; or providing an indication that further training of the first and/or second candidate model is required, and optionally determining a training regime for further training of the first and/or second candidate model based on the performance metric.

10. The method of any preceding claim, wherein the evaluation model is smaller than the first and/or second candidate models.

11. The method of any preceding claim, wherein the privileged information comprises one or more of:

   one or more ground-truth solutions;
   one or more rating guidelines;
   one or more prior evaluations;
   one or more search results;
   one or more multimodal annotations;
   one or more intermediate solutions.

12. The method of any preceding claim, wherein the method further comprises generating one or more pieces of privileged information, wherein generating comprises:

   providing, to a synthesis model, an input comprising the first query;
   generating, using the synthesis model, one or more pieces of privileged information conditioned on the first query.

13. The method of claim 12, wherein the input further comprises:

   one or more instructions associated with a request to generate the privileged information; and/or
   a ground-truth solution to the first query.

14. A system comprising:

   one or more computers; and
   one or more storage devices communicatively coupled to the one or more computers, wherein the one or more storage devices store instructions that, when executed by the one or more computers, cause the one or more computers to perform the operations of the respective method of any preceding claim.

15. One or more non-transitory computer storage media storing instructions that, when executed by one or more computers, cause the one or more computers to perform the operations of the respective method of any one of claims 1 to 14.

**FIG. 1**

**FIG. 2**

FIG. 3

FIG. 4

FIG. 5

**FIG. 6**

**FIG. 7**

EP 4 722 996 A1

**FIG. 8**

Europäisches
Patentamt
European
Patent Office
Office européen
des brevets

# EUROPEAN SEARCH REPORT

**Application Number**

EP 25 20 6134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIWEI MA ET AL: "I2EBench: A Comprehensive Benchmark for Instruction-based Image Editing", ARXIV.ORG, CORNELL UNIVERSITY LIBRARY, 201 OLIN LIBRARY CORNELL UNIVERSITY ITHACA, NY 14853, 26 August 2024 (2024-08-26), XP091860486, * abstract * * Sections 3, 4, 5; figure 4; tables 1, 2 * | 1-15 | INV. G06N20/00 |
| A | JAEMIN CHO ET AL: "Visual Programming for Text-to-Image Generation and Evaluation", ARXIV.ORG, CORNELL UNIVERSITY LIBRARY, 201 OLIN LIBRARY CORNELL UNIVERSITY ITHACA, NY 14853, 27 October 2023 (2023-10-27), XP091646038, * abstract * * Sections 3, 4 and 5, Appendix B; figures 1-4, 5 * | 1-15 | |

|  |  |  | **TECHNICAL FIELDS SEARCHED (IPC)** |
|---|---|---|---|
|  |  |  | G06N |

The present search report has been drawn up for all claims

| Place of search | Date of completion of the search | Examiner |
|---|---|---|
| The Hague | 19 December 2025 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **PADLEWSKI et al.** *Vibe-Eval: a hard evaluation suite for measuring progress of multimodal language models*, https://publications.reka.ai/reka-vibe-eval.pdf
- **ALAYRAC et al.** *arXiv:2204.14198*
- **JIA et al.** *arXiv:2102.05918*
- **CHEN et al.** *arXiv:2209.06794*
- **CHEN et al.** *arXiv:2305.18565*
- **DRIESS et al.** *arXiv:2303.03378*
- **BROHAN et al.** *arXiv:2212.06817*
- **BROHAN et al.** *arXiv:2307.15818*
- **CHEN et al.** Web Language Image. *arXiv:2305.18565v1*
- **KRISHNA et al.** *arXiv:1602.07332*
- **SHAO et al.** Objects365: A large-scale, high-quality dataset for object detection. *IEEE/CVF international conference on computer vision*, 8430-8439
- **KUZNETSOVA et al.** *arXiv:1811.00982*
- **ORDONEZ et al.** Im2Text: Describing Images Using 1 Million Captioned Photographs. *NeurIPS*, 2011
- **SHARMA et al.** Conceptual Captions: A Cleaned, Hypernymed, Image Alt-text Dataset For Automatic Image Captioning. *ACL*, 2018
- **KAY et al.** *arXiv:1705.06950*
- Audio set: An ontology and human-labeled dataset for audio events. **GEMMEKE et al.** ICASSP. IEEE, 2017, 776-780
- **EBERT et al.** *arXiv:2109.13396*